# EUROPEAN PATENT APPLICATION

(11) **EP 4 797 159 A1**
(43) Date of publication of application: **26.08.2026**
(21) Application number: 24895819.1
(22) Date of filing: 27.08.2024
(51) Int. Cl.: G06N 3/082, G06N 3/04

(54) **MODEL QUANTIZATION METHOD AND RELATED APPARATUS**

(30) Priority: 29.11.2023 CN 202311626819
(71) Applicant: HUAWEI TECHNOLOGIES CO., LTD., Shenzhen 518129 (CN)
(72) Inventor: LIU, Xiaoyu, Shenzhen, Guangdong 518129 (CN); DING, Xin, Shenzhen, Guangdong 518129 (CN); TU, Zhijun, Shenzhen, Guangdong 518129 (CN); LI, Wei, Shenzhen, Guangdong 518129 (CN); HU, Jie, Shenzhen, Guangdong 518129 (CN); CHEN, Hanting, Shenzhen, Guangdong 518129 (CN); WANG, Yunhe, Shenzhen, Guangdong 518129 (CN)
(74) Representative: Thun, Clemens
(86) International application number: PCT/CN2024/114829
(87) International publication number: WO 2025/112718

(57) **Abstract**

A model quantization method is provided, applied to model quantization in the field of artificial intelligence technologies. In the method, a target model is divided into a plurality of parts based on a connection relationship between network structures in the target model, and a plurality of rounds of quantization processes are performed on the target model. The plurality of rounds of quantization processes are sequentially performed based on the network structures of the model. A part of the network structures in the target model are quantized in each round of quantization process. Therefore, a quantity of parameters loaded onto a processing device at a time is reduced, ensuring that the quantization process of the target model can be successfully performed. In the quantization process, there is an overlapping network structure in any two consecutive rounds of quantization processes, and a dependency relationship between the network structures is fully considered, ensuring that a joint optimization relationship can be established between the network structures in the plurality of rounds of quantization processes. This avoids independently performing quantization on different network structures in each round of quantization process, which would make global optimization difficult to be achieved, and ensures accuracy of the final quantized target model.

## Description

This application claims priority to Chinese Patent Application No. 202311626819.4, filed with the China National Intellectual Property Administration on November 29, 2023, and entitled "MODEL QUANTIZATION METHOD AND RELATED APPARATUS", which is incorporated herein by reference in its entirety.

### TECHNICAL FIELD

This application relates to the field of artificial intelligence (Artificial Intelligence, AI) technologies, and in particular, to a model quantization method and a related apparatus.

### BACKGROUND

With the continuous advancement of AI, neural network models are widely used in different fields, and have achieved effects far superior to those achieved in the past. In addition, as a quantity of parameters of a neural network model becomes increasingly large, a large quantity of memory resources and compute resources need to be occupied when the neural network model is running, severely constraining deployment of the neural network model in various scenarios.

To resolve a problem that the neural network model is difficult to be deployed due to the large quantity of parameters, the concept of model quantization has been proposed in related technologies. Model quantization is essentially a compression technique for neural network models. Specifically, in model quantization, low bit widths are used to represent weight parameters and feature data in a neural network model, to save memory space and reduce a calculation amount. Generally, in the related technologies, an entire neural network model is loaded onto a processing device, and then the entire neural network model is quantized, to ensure accuracy of a quantized neural network model.

However, with the rise of large language models, a large language model with a huge quantity of parameters cannot be completely loaded onto a processing device at a time. Consequently, it is difficult to quantize a model with a huge quantity of parameters, for example, a large language model, by using the model quantization method in the related technologies.

### SUMMARY

This application provides a model quantization method, to quantize a model with a huge quantity of parameters, and ensure accuracy of a quantized model.

A first aspect of this application provides a model quantization method, applied to quantization of a model with a large quantity of parameters in the AI field. The method includes: A target model is obtained, where the target model is a neural network model that needs to be quantized, and the target model is a model trained based on training data in a training set. Generally, the target model is a neural network model with a large quantity of parameters, and it is difficult for a conventional AI processing device to load the entire target model at a time for a quantization process.

After the target model is obtained, the target model may be divided into a plurality of network structures that are sequentially connected. In other words, the target model includes the plurality of network structures that are sequentially connected. The target model is divided into a plurality of parts for a subsequent quantization process, and each part corresponds to one network structure. In the plurality of network structures obtained through division, an output of a previous network structure is an input of a network structure next to the previous network structure, that is, there is an input-output dependency relationship between adjacent network structures.

Finally, a plurality of rounds of quantization processes are performed to obtain a quantized target model, where the quantized target model includes a plurality of quantized network structures. The plurality of rounds of quantization processes are sequentially performed based on a connection sequence of the plurality of network structures. In addition, in the plurality of rounds of quantization processes, at least two consecutive network structures among the plurality of network structures are quantized in each round of quantization process, and a part of the plurality of network structures are quantized in each round of quantization process. In addition, for any two consecutive rounds of quantization processes in the plurality of rounds of quantization processes, there is at least one network structure that is quantized in both a latter round and a former round. It should be noted that, for a network structure (that is, the at least one repeated network structure) repeatedly quantized in two consecutive rounds of quantization processes, a latter round of quantization process is actually performed based on a former round of quantization process, that is, a quantization parameter used when quantization in the latter round of quantization process just starts is a quantization parameter determined in the former round of quantization process.

In this solution, a target model is divided into a plurality of parts based on a connection relationship between network structures in the target model, and a plurality of rounds of quantization processes are performed on the target model. The plurality of rounds of quantization processes are sequentially performed based on the network structures of the model. A part of the network structures in the target model are quantized in each round of quantization process. Therefore, a quantity of parameters loaded onto a processing device at a time is reduced, to ensure that the quantization process of the target model can be successfully performed. In addition, in the quantization process, there is an overlapping network structure in any two consecutive rounds of quantization processes, and a dependency relationship between the network structures is fully considered, to ensure that a joint optimization relationship can be established between the network structures in the plurality of rounds of quantization processes, so as to effectively avoid a case in which global optimization cannot be achieved because different network structures are independently quantized in each round of quantization process, and ensure accuracy of the final quantized target model.

In a possible implementation, first N network structures quantized in the latter round of quantization process and last N network structures quantized in the former round of quantization process are same N network structures, and N is an integer greater than or equal to 1. For example, it is assumed that both the former round of quantization process and the latter round of quantization process involve quantization of M network structures. In this case, last N network structures in the M network structures quantized in the former round of quantization process and first N network structures in the M network structures quantized in the latter round of quantization process are actually same N network structures, that is, there are N overlapping network structures in the two consecutive rounds of quantization processes.

In this solution, in two consecutive rounds of quantization processes, an overlapping network structure is quantized together with other network structures in the former round of quantization process, and is quantized together with other network structures in the latter round of quantization process, so that a connection relationship between different rounds of quantization processes is established, to effectively avoid a case in which global optimization cannot be achieved because different network structures are independently quantized in each round of quantization process.

In a possible implementation, any round of quantization process other than a 1^{st} round of quantization process in the plurality of rounds of quantization processes is considered as a target round of quantization process. In this case, the target round of quantization process specifically includes: First, first input data is input into at least two network structures to obtain first output data, where the at least two network structures are network structures quantized in the target round of quantization process, and the first input data is an output of network structures preceding the at least two network structures. Because the current at least two network structures are not located at a starting location of the target model, an input of the at least two network structures is actually feature data (that is, the first input data) output by the network structures preceding the at least two network structures.

Then, second input data is input into at least two network structures that have been quantized based on a quantization parameter, to obtain second output data, where the second input data is an output of quantized network structures preceding the at least two network structures.

Afterward, the quantization parameter for the at least two network structures is updated based on a difference between the first output data and the second output data. For example, the quantization parameter for the at least two network structures is updated through gradient backpropagation, so that when the at least two network structures are quantized based on an updated quantization parameter, an output of the at least two network structures can be closer to an output before quantization.

In this solution, in a process of determining a quantization parameter for a network structure, an output of the original network structure is used as a supervision signal, a difference is constructed between the output of the original network structure and an output of a network structure obtained through quantization based on the quantization parameter, and the quantization parameter is updated with a goal of minimizing the output difference, so that an accurate quantization parameter can be obtained, and precision of the network structure obtained through quantization based on the quantization parameter is ensured.

In a possible implementation, the quantization parameter for a weight parameter includes a quantization stepsize and a weight compensation matrix, the quantization stepsize is used to update a weight parameter in a network structure, and the weight compensation matrix is used to compensate for an updated weight parameter.

In addition, the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices. Low-rank decomposition is a manner of decomposing a high-dimensional matrix into low-rank matrices, and can effectively reduce data dimensionality and reduce redundant information.

In this solution, a plurality of matrices with a small quantity of parameters are obtained by performing low-rank decomposition on the weight compensation matrix with a large quantity of parameters, so that the plurality of matrices with a small quantity of parameters can be learned in the quantization process, and the weight compensation matrix with a large quantity of parameters does not need to be learned, to greatly reduce a quantity of parameters to be learned in the quantization process, and reduce a quantity of iterations and resource occupation in the quantization process. Especially for a large language model with a huge quantity of parameters, a plurality of matrices with a very small quantity of parameters can be obtained by performing low-rank decomposition on a weight compensation matrix with a huge quantity of parameters, to greatly reduce costs of learning the weight compensation matrix.

In a possible implementation, the difference between the first output data and the second output data is a weighted average value of a first difference value and a second difference value, the first difference value is a Euclidean distance between the first output data and the second output data, and the second difference value is a relative entropy between the first output data and the second output data.

In this solution, the difference between the outputs of the network structures is constructed based on the weighted average value of the Euclidean distance and the relative entropy between the outputs, so that abnormal values in the feature data can be effectively coped with, and robustness of subsequently optimizing the network structures based on the difference can be improved.

In a possible implementation, during execution of each round of quantization process, the model quantization method further includes: One or more outliers are selected from a plurality of values of a weight parameter in a network structure. In other words, the one or more outliers are identified in the plurality of values of the weight parameter. The one or more outliers refer to one or more values that differ greatly from other values in the plurality of values of the weight parameter.

Then, a value of the weight parameter corresponding to the one or more outliers is set to a preset threshold. The preset threshold may be a preset value determined based on a distribution range of the plurality of values of the weight parameter, for example, 0, or any value in a distribution range of other values of the weight parameter than the outliers in the plurality of values of the weight parameter.

In this solution, the outlier in the weight parameter is identified, and the value of the weight parameter that is classified as the outlier is adjusted to the preset threshold, so that the distribution range of the weight parameter can be narrowed down, to reduce difficulty in learning the quantization parameter, facilitate learning of a better quantization parameter, and improve accuracy of the quantized target model. In addition, because an outlier of an activation value is caused by the outlier of the weight parameter to some extent, the adjustment of the outlier of the weight parameter can improve the outlier of the activation value, to facilitate learning of a better quantization parameter for the activation value.

In a possible implementation, the identifying the one or more outliers based on the plurality of values of the weight parameter in the network structure may specifically include: First, a coarse-grained outlier range is identified based on the plurality of values of the weight parameter, where values of the weight parameter in the coarse-grained outlier range are all greater than a first threshold or are all less than a second threshold, and the first threshold and the second threshold are determined based on distribution of the plurality of values of the weight parameter. In other words, first, the first threshold or the second threshold is determined based on the distribution status of the plurality of values of the weight parameter, and a range within which the values of the weight parameter greater than the first threshold fall is determined as the coarse-grained outlier range, or a range within which the values of the weight parameter less than the second threshold fall is determined as the coarse-grained outlier range. Specifically, the first threshold may be a positive value, and the second threshold is a negative value. In general, the values in the coarse-grained outlier range are far away from 0.

Then, a fine-grained outlier range is further determined in the coarse-grained outlier range. The fine-grained outlier range falls within the coarse-grained outlier range, and distribution of values in the fine-grained outlier range meets a preset condition. After the fine-grained outlier range is identified, it may be determined that a value of the weight parameter in the fine-grained outlier range belongs to the one or more outliers.

In this solution, a threshold is first determined based on the distribution status of the values of the weight parameter, a coarse-grained outlier range is determined based on the threshold, and then a fine-grained range that meets a preset condition is further searched for in the coarse-grained outlier range, so that efficiency of determining an outlier can be effectively improved.

In a possible implementation, during execution of each round of quantization process, the model quantization method further includes: selecting at least one outlier from a plurality of values of an activation value in a network structure; and scaling a value of the activation value corresponding to the at least one outlier based on a target ratio.

In this solution, the outlier in the activation value is identified, and the activation value that is classified as the outlier is scaled, so that the distribution range of the activation value can be narrowed down, to reduce difficulty in learning the quantization parameter, facilitate learning of a better quantization parameter, and improve accuracy of the quantized target model.

In a possible implementation, the target model is a large language model.

In a possible implementation, each of the plurality of network structures in the target model includes one or more transformer blocks.

A second aspect of this application provides a model quantization apparatus, including: an obtaining module, configured to obtain a target model, where the target model includes a plurality of network structures that are sequentially connected; and a processing module, configured to perform a plurality of rounds of quantization processes to obtain a quantized target model, where the quantized target model includes a plurality of quantized network structures, and the plurality of rounds of quantization processes are sequentially performed based on a connection sequence of the plurality of network structures, where in the plurality of rounds of quantization processes, at least two consecutive network structures among the plurality of network structures are quantized in each round of quantization process, a part of the plurality of network structures are quantized in each round of quantization process, and for any two consecutive rounds of quantization processes in the plurality of rounds of quantization processes, there is at least one network structure that is quantized in both a latter round and a former round.

In a possible implementation, first N network structures quantized in the latter round of quantization process and last N network structures quantized in the former round of quantization process are same N network structures, and N is an integer greater than or equal to 1.

In a possible implementation, the processing module is further configured to: input first input data into at least two network structures to obtain first output data, where the at least two network structures are network structures quantized in the target round of quantization process, the first input data is an output of network structures preceding the at least two network structures, and the target round of quantization process is one of the plurality of rounds of quantization processes; input second input data into at least two network structures that have been quantized based on a quantization parameter, to obtain second output data, where the second input data is an output of quantized network structures preceding the at least two network structures; and update the quantization parameter for the at least two network structures based on a difference between the first output data and the second output data.

In a possible implementation, the quantization parameter includes a quantization stepsize and a weight compensation matrix, the quantization stepsize is used to update a weight parameter in a network structure, and the weight compensation matrix is used to compensate for an updated weight parameter; and the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices.

In a possible implementation, the difference is a weighted average value of a first difference value and a second difference value, the first difference value is a Euclidean distance between the first output data and the second output data, and the second difference value is a relative entropy between the first output data and the second output data.

In a possible implementation, during execution of each round of quantization process, the processing module is further configured to: select one or more outliers from a plurality of values of a weight parameter in a network structure; and set a value of the weight parameter corresponding to the one or more outliers to a preset threshold.

In a possible implementation, the processing module is further configured to: determine a coarse-grained outlier range based on the plurality of values of the weight parameter, where values of the weight parameter in the coarse-grained outlier range are all greater than a first threshold or are all less than a second threshold, and the first threshold or the second threshold is determined based on distribution of the plurality of values of the weight parameter; and determine a fine-grained outlier range based on the coarse-grained outlier range, where the fine-grained outlier range falls within the coarse-grained outlier range, distribution of values in the fine-grained outlier range meets a preset condition, and a value of the weight parameter in the fine-grained outlier range belongs to the one or more outliers.

In a possible implementation, during execution of each round of quantization process, the processing module is further configured to: select at least one outlier from a plurality of values of an activation value in a network structure; and scale a value of the activation value corresponding to the at least one outlier based on a target ratio.

In a possible implementation, the target model is a large language model.

In a possible implementation, each of the plurality of network structures includes one or more transformer blocks.

A third aspect of this application provides a model quantization apparatus. The model quantization apparatus may include a processor. The processor is coupled to a memory. The memory stores program instructions. When the program instructions stored in the memory are executed by the processor, the method according to any one of the first aspect or the implementations of the first aspect is implemented. For steps performed by the processor in the possible implementations of the first aspect, refer to the first aspect. Details are not described herein again.

A fourth aspect of this application provides a computer-readable storage medium. The computer-readable storage medium stores a computer program. When the computer program is run on a computer, the computer is enabled to perform the method according to any implementation of the first aspect.

A fifth aspect of this application provides a circuit system. The circuit system includes a processing circuit. The processing circuit is configured to perform the method according to any implementation of the first aspect.

A sixth aspect of this application provides a computer program product. When the computer program product runs on a computer, the computer is enabled to perform the method according to any implementation of the first aspect.

A seventh aspect of this application provides a chip system. The chip system includes a processor, configured to support an electronic device in implementing a function in any implementation of the first aspect, for example, processing data and/or information in the foregoing method. In a possible design, the chip system further includes a memory. The memory is configured to store program instructions and data that are necessary for the electronic device. The chip system may include a chip, or may include a chip and another discrete component.

For beneficial effects of the second aspect to the seventh aspect, refer to the descriptions of the first aspect. Details are not described herein again.

### BRIEF DESCRIPTION OF DRAWINGS

FIG. 1 is a diagram of a system architecture 100 according to an embodiment of this application;
FIG. 2 is a schematic flowchart of a model quantization method according to an embodiment of this application;
FIG. 3A is a diagram of performing a plurality of rounds of quantization processes on a target model according to an embodiment of this application;
FIG. 3B is another diagram of performing a plurality of rounds of quantization processes on a target model according to an embodiment of this application;
FIG. 3C is still another diagram of performing a plurality of rounds of quantization processes on a target model according to an embodiment of this application;
FIG. 4 is a schematic flowchart of quantizing a target model according to an embodiment of this application;
FIG. 5 is a diagram of performing low-rank decomposition on a weight compensation matrix according to an embodiment of this application;
FIG. 6 is a diagram showing comparison of distribution of a weight parameter according to an embodiment of this application;
FIG. 7 is another diagram showing comparison of distribution of a weight parameter according to an embodiment of this application;
FIG. 8 is a schematic flowchart of preprocessing a weight parameter according to an embodiment of this application;
FIG. 9 is a diagram showing comparison of distribution of an activation value according to an embodiment of this application;
FIG. 10 is another diagram showing comparison of distribution of an activation value according to an embodiment of this application;
FIG. 11 is a diagram of a structure of a model quantization apparatus according to an embodiment of this application;
FIG. 12 is a diagram of a structure of an electronic device according to an embodiment of this application;
FIG. 13 is a diagram of a structure of a chip according to an embodiment of this application; and
FIG. 14 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are only some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Naming or numbering of steps in this application does not mean that steps in a method procedure need to be performed based on a time/logical sequence indicated by the naming or numbering. An execution sequence of procedure steps that have been named or numbered may be changed based on a technical objective to be implemented, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electrical or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

### (1) Model quantization

Model quantization is actually a compression technology for neural network models. Specifically, in model quantization, low bit widths are used to represent weight parameters and feature data in a neural network model, to save memory space and reduce a calculation amount. Generally, model quantization is a process of mapping a parameter of a neural network model from a single-precision floating point number (32-bit floating point number, FP32) to n bits. Simply speaking, a data mapping relationship is established between data such as a fixed-point number and a floating point number, so that a good benefit is obtained with a low precision loss. For example, a parameter of the neural network model is mapped from an FP32 to an 8-bit signed integer (INT8), so that fourfold parameter compression can be implemented, and faster computation can be implemented while memory is compressed, to effectively improve performance of the model.

Generally, model quantization is classified into two types: post-training quantization (Post-training Quantization, PTQ) and quantization-aware training (Quantization-aware Training, QAT). PTQ is a process in which a pre-trained neural network model can be quantized by using only a small quantity of unlabeled calibration datasets, and is usually used to compress a neural network model in which a parameter is represented by using a high bit width. QAT needs a complete dataset to train a neural network model, and simulates a quantization operation in a training process, so that a quantized model (that is, the model after quantization) can further converge to an optimal point. QAT is usually used in a precision recovery process after a large precision loss occurs in the quantized model.

In addition, in a model quantization process, a weight parameter and an activation value in a neural network model are generally quantized. The weight parameter is a parameter for processing input data at each neural network layer of the neural network model, and is a variable that can be adjusted in a training process. The activation value is usually feature data obtained after each neural network layer processes the input data. In the neural network model, an output of a previous neural network layer is used as an input of a neural network layer next to the previous neural network layer. Therefore, an activation value of a neural network layer is usually used as an input of a neural network layer next to the previous neural network layer. The weight parameter and the activation value are quantized, so that a parameter quantity and a calculation amount of the neural network model can be greatly reduced, to improve running performance of the neural network model.

### (2) Neural network

A neural network may be composed of neural units. The neural unit may be an operation unit that uses *xₛ* (that is, input data) and an intercept term of 1 as inputs. An output of the operation unit may be: ${h}_{W , b} \left(x\right) = f \left({W}^{T}x\right) = f \left({\sum }_{s = 1}^{n} {W}_{s} {x}_{s} + b\right) ,$ where s=1, 2, ..., n, n is a natural number greater than 1, *Wₛ* is a weight parameter of *xₛ*, and b is an offset of the neural unit. f is an activation function (activation function) of the neural unit. The activation function is used to introduce a non-linear characteristic into the neural network, to convert an input signal in the neural unit into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neural unit may be connected to a local receptive field of a previous layer to extract a feature of the local receptive field. The local receptive field may be a region including several neural units.

### (3) Deep neural network (Deep Neural Network, DNN)

A deep neural network, also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an i^{th} layer is necessarily connected to any neuron at an (i+1)^{th} layer. Although the DNN appears complex, the work of each layer is actually quite simple, and can be briefly described by the following linear relationship: y̅ = α(Wx̅ + b̅), where x̅ is an input vector, y̅ is an output vector, b̅ is a bias vector, W is a weight matrix (also referred to as coefficient), and α() is an activation function. At each layer, the output vector y̅ is obtained by performing such a simple operation on the input vector x̅. Because there are a large quantity of DNN layers, there are a large quantity of coefficients W and offset vectors b̅. Definitions of these parameters in the DNN are as follows: The coefficient W is used as an example. It is assumed that in a DNN having three layers, a linear coefficient from a fourth neuron at a second layer to a second neuron at a third layer is defined as ${w}_{24}^{3}$. The superscript 3 represents a layer at which the coefficient W is located, and the subscript corresponds to an output third-layer index 2 and an input second-layer index 4. To sum up, a coefficient from a k^{th} neuron in an (L-1)^{th} layer to a j^{th} neuron in an L^{th} layer is defined as ${W}_{jk}^{L}$. It should be noted that the input layer does not have the parameter W. In the deep neural network, more hidden layers make the network more capable of describing a complex case in the real world. Theoretically, a model with more parameters has higher complexity and a larger "capacity", indicating that the model can complete a more complex learning task. Training the deep neural network is a process of learning a weight matrix, and a final objective of the training is to obtain a weight matrix of all layers of the trained deep neural network (a weight matrix formed by vectors W at many layers).

### (4) Convolutional neural network (Convolutional Neural Network, CNN)

A convolutional neural network is a deep neural network of a convolutional structure. The convolutional neural network includes a feature extractor including a convolutional layer and a sampling sub-layer. The feature extractor may be considered as a filter. A convolution process may be considered as performing convolution by using a trainable filter and an input feature map (feature map). The convolutional layer is a neural unit layer that is in the convolutional neural network and at which convolution processing is performed on an input signal. At the convolutional layer of the convolutional neural network, one neural unit may be connected to only a part of adjacent-layer neural units. One convolutional layer usually includes several feature planes, and each feature plane may include some neural units that are in a rectangular arrangement. Neural units in a same feature plane share a weight, and the weight shared herein is a convolution kernel.

The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

### (5) Attention network

An attention network is a network model that uses an attention mechanism to improve a model training speed. Currently, a typical attention network includes a transformer. The model to which the attention mechanism is applied can assign different weights to parts of an input sequence, so that more important feature information is extracted from the input sequence, and the model finally obtains a more accurate output.

The transformer is a neural network architecture based on a self-attention mechanism. The transformer usually includes an encoder and a decoder, and each part includes a plurality of layers of stacked self-attention and feedforward neural networks. The self-attention mechanism allows the model to consider information related to all locations when processing the sequence, to resolve the problem of long-distance dependency.

### (6) Large language model (large language model, LLM)

A large language model is a deep learning model trained using a large amount of text data, and can generate a natural language text or understand a meaning of a language text. The large language model can process a plurality of natural language tasks, such as text classification, question and answer, and dialogs, and is an important way to artificial intelligence.

### (7) Outlier (outlier)

An outlier is also referred to as an anomalous value. When one or more values in data differ greatly from other values, the values that differ greatly from other values are outliers.

### (8) Quartile (Quartile)

Quartiles, also referred to as quartile points, refer to values of three points that divide all values, arranged in ascending order, into four equal parts in statistics. Quartiles are three points that divide all data into four parts, each part containing 25% of the data.

There are three quartiles. A first quartile is referred to as a lower quartile, a second quartile is a median, and a third quartile is referred to as an upper quartile, which are represented by Q1, Q2, and Q3 respectively.

The first quartile (Q1), also referred to as a "smaller quartile", is equal to the 25^{th} percentile of a sample when all values are arranged in ascending order.

The second quartile (Q2), also referred to as a "median", is equal to the 50^{th} percentile of a sample when all values are arranged in ascending order.

The third quartile (Q3), also referred to as a "larger quartile", is equal to the 75^{th} percentile of a sample when all values are arranged in ascending order.

A difference between the third quartile and the first quartile is also referred to as an interquartile range (Interquartile Range, IQR).

### (9) Euclidean distance

A Euclidean distance, also referred to as a Euclidean metric or an L2 distance, is the most commonly used distance measure for measuring an absolute distance between two points in multi-dimensional space.

### (10) Relative entropy (relative entropy)

A relative entropy, also referred to as a Kullback-Leibler divergence (KL divergence) or an information divergence (information divergence), is an asymmetric measure of a difference between two probability distributions (probability distributions). In an information theory, the relative entropy is equivalent to a difference between Shannon entropies (Shannon entropies) of the two probability distributions.

Relative entropies are loss functions of some optimization algorithms such as an expectation-maximization algorithm (expectation-maximization algorithm, EM). In this case, one probability distribution involved in computation is a true distribution, and the other is a theoretical (or fitted) distribution. The relative entropy represents an information loss generated when the theoretical distribution is used to fit the true distribution.

It is found through research by the applicant that in a model quantization technology in a related technology, an entire neural network model is loaded onto a processing device, and then, the entire neural network model is quantized, to ensure accuracy of a quantized neural network model. However, with the rise of large-scale models such as large language models, a large language model with a huge quantity of parameters cannot be completely loaded onto a processing device at a time. Consequently, it is difficult to quantize a model with a huge quantity of parameters, for example, a large language model, by using a model quantization method in the related technology.

Based on this, embodiments of this application provide a model quantization method. A target model is divided into a plurality of parts based on a connection relationship between network structures in the target model, and a plurality of rounds of quantization processes are performed on the target model. The plurality of rounds of quantization processes are sequentially performed based on the network structures of the model. A part of the network structures in the target model are quantized in each round of quantization process. Therefore, a quantity of parameters loaded onto a processing device at a time is reduced, to ensure that the quantization process of the target model can be successfully performed. In addition, in the quantization process, there is an overlapping network structure in any two consecutive rounds of quantization processes, and a dependency relationship between the network structures is fully considered, to ensure that a joint optimization relationship can be established between the network structures in the plurality of rounds of quantization processes, so as to effectively avoid a case in which global optimization cannot be achieved because different network structures are independently quantized in each round of quantization process, and ensure accuracy of the final quantized target model.

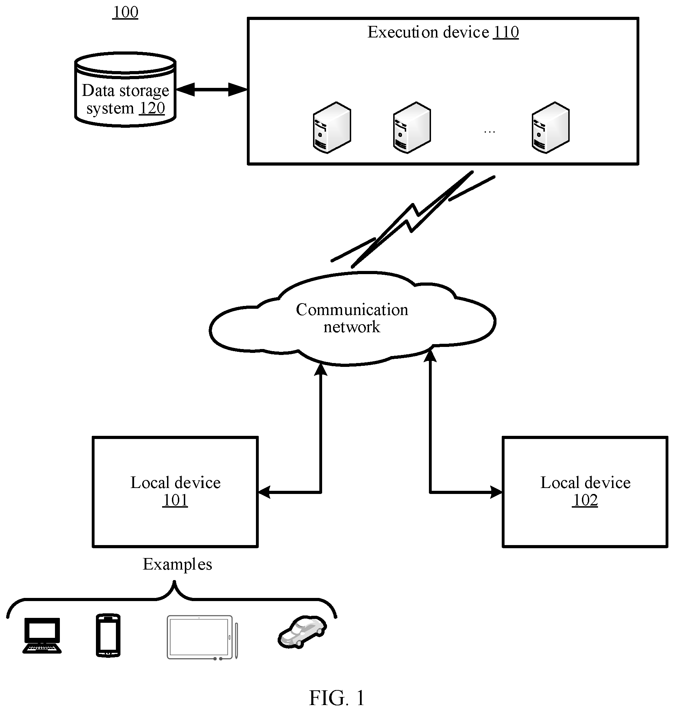

FIG. 1 is a diagram of a system architecture 100 according to an embodiment of this application. As shown in FIG. 1, in the system architecture 100, an execution device 110 may be implemented by one or more servers. Optionally, the execution device 110 cooperates with another compute device, for example, a device such as a data storage device, a router, or a load balancer. The execution device 110 may be disposed at one physical site, or may be distributed at a plurality of physical sites. The execution device 110 may implement the model quantization method provided in embodiments of this application by using data in a data storage system 120 or by invoking program code in the data storage system 120.

Users may operate user equipments (for example, a local device 101 and a local device 102) to interact with the execution device 110. Each local device may represent any compute device, such as a personal computer, a computer workstation, a smartphone, a tablet computer, a notebook computer, and a smart car.

The local device of each user may interact with the execution device 110 through a communication network of any communication mechanism/communication standard. The communication network may be a wide area network, a local area network, a point-to-point connection, or any combination thereof.

In an implementation, the execution device 110 is configured to implement the model quantization method provided in embodiments of this application, to obtain a quantized model. In addition, in a process in which the local device 101 and the local device 102 need to perform inference by using the model, the execution device 110 processes, based on the quantized model, data provided by the users, and returns corresponding processing results to the local device 101 and the local device 102.

In another implementation, the execution device 110 is configured to: implement the model quantization method provided in embodiments of this application, and deliver an obtained quantized model to the local device 101 and the local device 102. In this way, the quantized model may be deployed locally in the local device 101 and the local device 102, so that the local device 101 and the local device 102 perform data processing based on the quantized model.

In another implementation, one or more aspects of the execution device 110 may be implemented by each local device. For example, the local device 101 may provide local data for or feed back a computation result to the execution device 110, or perform the model quantization method provided in embodiments of this application.

In general, the model quantization method provided in embodiments of this application may be applied to an electronic device, for example, the execution device 110, the local device 101, or the local device 102.

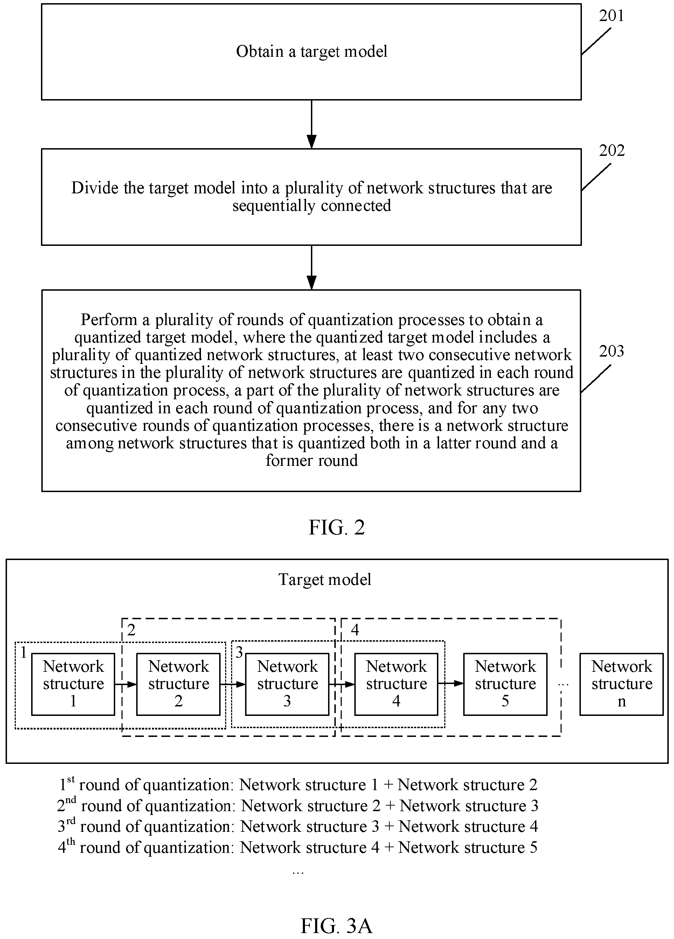

FIG. 2 is a schematic flowchart of a model quantization method according to an embodiment of this application. As shown in FIG. 2, the model quantization method provided in this embodiment of this application includes the following steps 201 to 203.

Step 201: Obtain a target model.

In this embodiment, the target model is a neural network model that needs to be quantized, and the target model is a model trained based on training data in a training set.

For example, the target model is a large language model, a convolutional neural network, an attention network, a recurrent neural network, or other types of models. This is not specifically limited in this embodiment. In addition, when the target model is different types of neural network models, the target model may be, for example, applied to a natural language processing (Natural Language Processing, NLP) task or a computer vision task. A task to which the target model is applied is not limited in this embodiment.

It should be noted that the target model is a neural network model with a large quantity of parameters, and it is difficult for a conventional AI processing device to load the entire target model at a time for a quantization process. For example, when the target model is a large language model, the target model usually includes hundreds of billions of parameters, and it is difficult for an existing graphics processing unit (graphics processing unit, GPU) cluster to load the entire target model at a time.

Step 202: Divide the target model into a plurality of network structures that are sequentially connected.

In this embodiment, based on network structures of the target model, the target model may be divided into a plurality of parts each corresponding to one network structure, so that the target model is divided into the plurality of network structures that are sequentially connected. In the plurality of network structures obtained through division, an output of a previous network structure is an input of a network structure next to the previous network structure, that is, there is an input-output dependency relationship between adjacent network structures. In addition, the output of the previous network structure is usually feature data (that is, a feature matrix), and there may be one or more pieces of feature data output by the previous network structure (where for example, one or more feature matrices are output). This is not specifically limited herein.

For example, when the target model is a large language model, the target model is usually formed by connecting a plurality of transformer blocks (Transformer blocks). For example, the target model includes 20 to 30 transformer blocks that are sequentially connected. Therefore, when the target model is divided into the network structures, one or more transformer blocks may be used as one network structure, so that the plurality of network structures that are sequentially connected are obtained through division.

In other words, for the plurality of network structures that are sequentially connected and that are obtained by dividing the target model, each of the plurality of network structures includes one or more transformer blocks. For example, for a target model that includes 30 transformer blocks that are sequentially connected, the target model may be divided into 30 network structures each corresponding to one transformer block.

Step 203: Perform a plurality of rounds of quantization processes to obtain a quantized target model, where the quantized target model includes a plurality of quantized network structures.

In this embodiment, the plurality of rounds of quantization processes are sequentially performed based on a connection sequence of the plurality of network structures, that is, one round of quantization process is performed each time. After the plurality of rounds of quantization processes are sequentially performed, all the network structures in the target model have been quantized, and the quantized target model is obtained. The quantized target model is actually formed by a plurality of quantized network structures. In other words, in a process of performing the plurality of rounds of quantization processes on the target model, other network structures sequentially starting from a first network structure in the target model may be quantized, until a last network structure in the target model is quantized.

In the plurality of rounds of quantization processes performed on the target model, at least two consecutive network structures among the plurality of network structures are quantized in each round of quantization process, a part of the plurality of network structures are quantized in each round of quantization process, and network structures quantized in different rounds of quantization processes are not completely the same. In addition, for any two consecutive rounds of quantization processes in the plurality of rounds of quantization processes, there is at least one network structure that is quantized in both a latter round and a former round.

In other words, a part of network structures that have been quantized in a former round of quantization process are quantized again in a latter round of quantization process. In this way, in two consecutive rounds of quantization processes, an overlapping network structure is quantized together with other network structures in the former round of quantization process, and is quantized together with other network structures in the latter round of quantization process, so that a connection relationship between different rounds of quantization processes is established, to effectively avoid a case in which global optimization cannot be achieved because different network structures are independently quantized in each round of quantization process.

For example, for any two consecutive rounds of quantization processes in the plurality of rounds of quantization processes, first N network structures quantized in a latter round of quantization process and last N network structures quantized in a former round of quantization process are same N network structures, and N is an integer greater than or equal to 1. A total quantity of network structures quantized in the latter round of quantization process may be the same as or different from a total quantity of network structures quantized in the former round of quantization process. For example, it is assumed that both the former round of quantization process and the latter round of quantization process involve quantization of M network structures. In this case, last N network structures in the M network structures quantized in the former round of quantization process and first N network structures in the M network structures quantized in the latter round of quantization process are actually same N network structures, that is, there are N overlapping network structures in the two consecutive rounds of quantization processes.

A quantity of network structures quantized in each round of quantization process may be determined based on a capability of a processing device, and for example, ranges from 2 to 6. Similarly, a quantity of overlapping network structures in the two consecutive rounds of quantization processes may also be determined based on the capability of the processing device and accuracy of the model after quantization. When the processing device has a strong capability and the accuracy of the model after quantization is high, a quantity of overlapping network structures in two consecutive rounds of quantization processes may be set to a large value.

In a possible example, FIG. 3A is a diagram of performing a plurality of rounds of quantization processes on a target model according to an embodiment of this application. In the example shown in FIG. 3A, when two consecutive network structures among the plurality of network structures are quantized in each round of quantization process for the target model, a first network structure quantized in a latter round of quantization process and a last network structure quantized in a former round of quantization process are a same network structure.

As shown in FIG. 3A, the target model includes n network structures that are sequentially connected, namely, a network structure 1 to a network structure n. The network structure 1 and the network structure 2 are quantized in a 1^{st} round of quantization process. The network structure 2 and the network structure 3 are quantized in a 2^{nd} round of quantization process. In other words, after the network structure 2 is quantized together with the network structure 1 in the 1^{st} round of quantization process, the network structure 2 continues to be quantized together with the network structure 3 in the 2^{nd} round of quantization process. Similarly, the network structure 3 and the network structure 4 are quantized in a 3^{rd} round of quantization process, the network structure 4 and the network structure 5 are quantized in a 4^{th} round of quantization process, ..., until quantization on the network structure n is completed.

In other words, in this embodiment, the network structures are actually quantized through a sliding window. A plurality of network structures included in the sliding window are actually quantized in each round of quantization process. The sliding window is slid to cause the sliding window to include different network structures, to trigger different rounds of quantization processes. In addition, two adjacent sliding windows include an overlapping network structure, to ensure joint quantization between network structures.

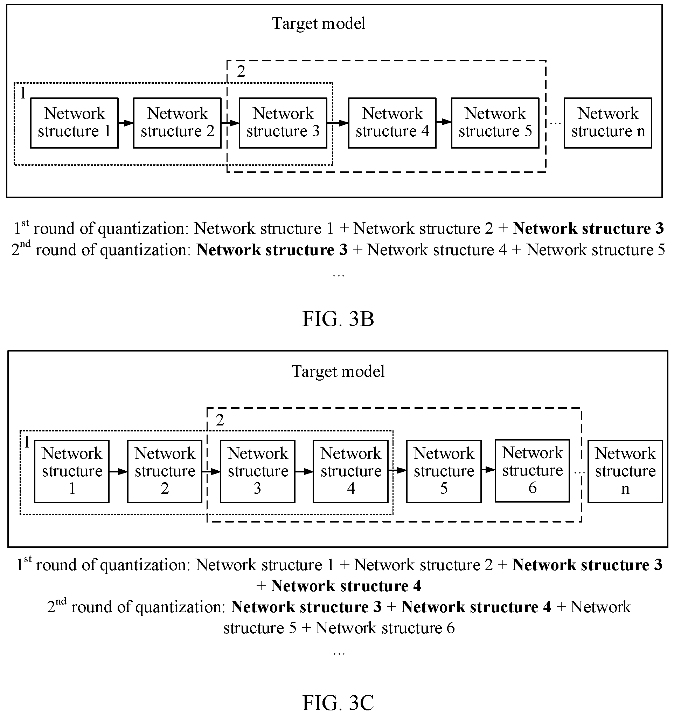

In another possible example, FIG. 3B is another diagram of performing a plurality of rounds of quantization processes on a target model according to an embodiment of this application. In the example shown in FIG. 3B, when three consecutive network structures among the plurality of network structures are quantized in each round of quantization process on the target model, a first network structure quantized in a latter round of quantization process and a last network structure quantized in a former round of quantization process are a same network structure.

FIG. 3B shows a target model including a network structure 1 to a network structure n. The network structure 1, the network structure 2, and the network structure 3 are quantized in a 1^{st} round of quantization process. The network structure 3, the network structure 4, and the network structure 5 are quantized in a 2^{nd} round of quantization process. In other words, after the network structure 3 is quantized together with the network structure 1 and the network structure 2 in the 1^{st} round of quantization process, the network structure 3 continues to be quantized together with the network structure 4 and the network structure 5 in the 2^{nd} round of quantization process.

In still another possible example, FIG. 3C is still another diagram of performing a plurality of rounds of quantization processes on a target model according to an embodiment of this application. FIG. 3B shows a target model including a network structure 1 to a network structure n. The network structure 1, the network structure 2, and the network structure 3, and the network structure 4 are quantized in a 1^{st} round of quantization process. The network structure 3, the network structure 4, the network structure 5, and the network structure 6 are quantized in a 2^{nd} round of quantization process. In other words, after the network structure 3 and the network structure 4 are quantized together with the network structure 1 and the network structure 2 in the 1^{st} round of quantization process, the network structure 3 and the network structure 4 continue to be quantized together with the network structure 5 and the network structure 6 in the 2^{nd} round of quantization process.

In general, for any two consecutive rounds of quantization processes in the plurality of rounds of quantization processes, a quantity of network structures quantized in a former round of quantization process may be the same as or different from a quantity of network structures quantized in a latter round of quantization process, and there may be one or more network structures that are repeatedly quantized in the two consecutive rounds of quantization processes.

The foregoing describes a procedure of performing the plurality of rounds of quantization processes on the target model to quantize the target model. For ease of understanding, the following describes in detail a specific procedure of each round of quantization process performed on the target model.

It may be understood that, in the plurality of rounds of quantization processes performed on the target model, a quantization parameter corresponding to a network structure in the target model is actually determined in each round of quantization process, so that a parameter in the network structure can be transformed based on the quantization parameter (where for example, the parameter in the network structure is transformed from an FP32 to an INT8), to obtain a network structure on which parameter transformation is performed (that is, a quantized network structure). When the quantization parameter corresponding to the network structure in the target model is determined, it needs to be ensured that an output of a network structure on which parameter transformation has been performed based on the determined quantization parameter is as close as possible to an output of the original network structure, that is, an output of the quantized network structure is as close as possible to an output of the network structure that is not quantized.

Based on this, in this embodiment, in each round of quantization process, an output difference between a network structure that is adjusted based on a quantization parameter and a network structure that is not quantized is compared, to restrict the quantization parameter corresponding to the network structure, so that an output difference between the network structure that is adjusted based on a finally determined quantization parameter and the network structure that is not quantized is as small as possible.

For example, for the 1^{st} round of quantization process in the plurality of rounds of quantization processes, a plurality of network structures that need to be quantized in the 1^{st} round of quantization process are first determined. Then, calibration data (for example, a part of training data in the training set of the target model) is input into the plurality of network structures that need to be quantized in the 1^{st} round of quantization process, and corresponding output data is obtained. After parameter transformation is performed, based on the quantization parameter, on the plurality of network structures that need to be quantized in the 1^{st} round of quantization process, the same calibration data is input into the plurality of network structures on which parameter transformation is performed, to obtain output data. In this way, a difference between output data of the plurality of network structures on which parameter transformation is not performed (that is, a plurality of original network structures) and output data of the plurality of network structures on which parameter transformation is performed is obtained, and the quantization parameter for the plurality of network structures can be updated based on the difference (where for example, the quantization parameter is updated through gradient backpropagation), so that an output of the plurality of network structures on which parameter transformation is performed based on the quantization parameter can finally meet a requirement.

In addition, any round of quantization process other than the 1^{st} round of quantization process in the plurality of rounds of quantization processes is considered as a target round of quantization process. In this case, the target round of quantization process specifically includes: First, first input data is input into at least two network structures to obtain first output data. The at least two network structures into which the first input data is input are network structures quantized in the target round of quantization process, and the first input data is an output of network structures preceding the at least two network structures. Because the current at least two network structures are not located at a starting location of the target model, an input of the at least two network structures is actually feature data (that is, the first input data) output by the network structures preceding the at least two network structures. The first input data is input into the at least two network structures, so that the first output data output by the at least two network structures that are not quantized can be obtained.

Then, second input data is input into at least two network structures that have been quantized based on a quantization parameter, to obtain second output data, where the second input data is an output of quantized network structures preceding the at least two network structures. When the entire target model is quantized, an input received by a network structure at a middle location is an output of a quantized network structure at a location preceding the middle location. Therefore, in this embodiment, output data (that is, the second input data) of the quantized network structure at the location preceding the middle location is used as an input of the network structure at the middle location (that is, the foregoing at least two network structures).

Afterward, the quantization parameter for the at least two network structures is updated based on a difference between the first output data and the second output data. Specifically, the quantization parameter for the at least two network structures may be updated through gradient backpropagation, so that when the at least two network structures are quantized based on an updated quantization parameter, an output of the at least two network structures can be closer to an output before quantization. In other words, a process of updating the quantization parameter based on the difference between the two pieces of output data is similar to a manner of updating a weight parameter in a model training process. It may be understood that the quantization parameter is updated by constructing a loss function indicating the difference between the output data, and a goal of updating the quantization parameter is to make the loss function as small as possible (that is, make the difference between the two pieces of output data as small as possible).

In an actual application, the step of updating the quantization parameter is repeatedly performed by using different input data, so that the quantization parameter can be continuously updated until an output of a network structure on which parameter transformation is performed based on the quantization parameter can meet a requirement, or until a quantity of times that the quantization parameter is repeatedly updated reaches a specific quantity of times, to finally complete the quantization of the network structure.

In this solution, in a process of determining a quantization parameter for a network structure, an output of the original network structure is used as a supervision signal, a difference is constructed between the output of the original network structure and an output of a network structure obtained through quantization based on the quantization parameter, and the quantization parameter is updated with a goal of minimizing the output difference, so that an accurate quantization parameter can be obtained, and precision of the network structure obtained through quantization based on the quantization parameter is ensured.

Optionally, the difference between the first output data and the second output data is, for example, a weighted average value of a first difference value and a second difference value, the first difference value is a Euclidean distance (that is, an L2 distance) between the first output data and the second output data, and the second difference value is a relative entropy (that is, a KL divergence) between the first output data and the second output data. In this solution, the difference between the outputs of the network structures is constructed based on the weighted average value of the Euclidean distance and the relative entropy between the outputs, so that abnormal values in the feature data can be effectively coped with, and robustness of subsequently optimizing the network structures based on the difference can be improved.

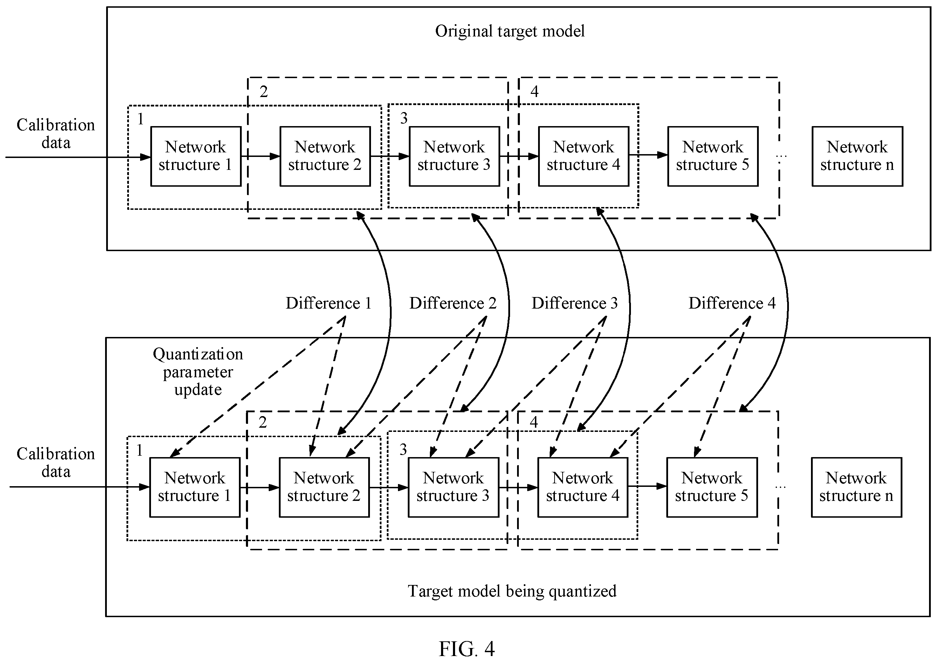

For example, FIG. 4 is a schematic flowchart of quantizing a target model according to an embodiment of this application. As shown in FIG. 4, in a process of quantizing the target model, same calibration data needs to be input to the original target model and the target model on which parameter transformation is performed based on the quantization parameter (that is, the target model being quantized shown in FIG. 4), a difference between outputs of network structures at same locations in the original target model and the target model being quantized is compared, and the quantization parameter corresponding to the network structure is updated based on the difference between the outputs.

Specifically, in the 1^{st} round of quantization process, parameter transformation is first performed on the target model based on a random quantization parameter, to obtain a target model being quantized. Then, the same calibration data is separately input into the original target model and the target model being quantized, and an output of the network structure 2 in the original target model and an output of the network structure 2 on which parameter transformation is performed based on the quantization parameter in the target model being quantized are obtained. Afterward, a difference 1 can be obtained by comparing the output of the network structure 2 with the output of the network structure 2 on which parameter transformation is performed. In this way, a quantization parameter corresponding to the network structure 1 and the network structure 2 may be updated through gradient backpropagation with a goal of minimizing the difference 1, until a final output of the network structure 1 and the network structure 2 on which parameter transformation is performed based on an updated quantization parameter is close to an output of the network structure 1 and the network structure 2 on which parameter transformation is not performed, or a quantity of times that the quantization parameter is updated reaches a preset quantity of times, to obtain a quantized network structure 1 and a quantized network structure 2.

In the 2^{nd} round of quantization process, when the calibration data remains unchanged, the calibration data is input into the quantized network structure 1, and an output of the quantized network structure 1 is input into the network structure 2 and the network structure 3 in the target model being quantized, to obtain an output of the network structure 3 on which parameter transformation is performed. Afterward, a difference 2 can be obtained by comparing an output of the original network structure 3 with the output of the network structure 3 on which parameter transformation is performed. In this way, a quantization parameter corresponding to the network structure 2 and the network structure 3 may be updated through gradient backpropagation with a goal of minimizing the difference 2, until a final output of the network structure 2 and the network structure 3 on which parameter transformation is performed based on an updated quantization parameter is close to an output of the network structure 2 and the network structure 3 on which parameter transformation is not performed, or a quantity of times that the quantization parameter is updated reaches a preset quantity of times, to obtain a quantized network structure 2 and a quantized network structure 3.

It should be noted that the network structure 2 is actually subjected to two rounds of quantization processes, to be specific, the network structure 2 is subjected to the 1^{st} round of quantization process together with the network structure 1, and is subjected to the 2^{nd} round of quantization process together with the network structure 3. The quantization parameter corresponding to the network structure 2 is fixed only after two rounds of quantization processes are completely performed on the network structure 2, that is, it is considered that the quantization of the network structure 2 is completed.

Similarly, based on a process similar to the 2^{nd} round of quantization process, the network structure 3 and the network structure 4, the network structure 4 and the network structure 5, and subsequent network structures may continue to be quantized, until quantization of a last network structure in the target model is completed, to obtain a quantized target model.

Generally, there may be two types of quantization parameters of a network structure: One is a quantization parameter for a weight parameter, and the other is a quantization parameter for an activation value. Parameter transformation can be performed on the weight parameter in the network structure based on the quantization parameter for the weight parameter, to obtain a quantized weight parameter. Similarly, parameter transformation can be performed on the activation value in the network structure based on the quantization parameter for the activation value, to obtain a quantized activation value.

For example, the quantized weight parameter may be shown in the following formula: ${Q}_{{Δ}_{w}} \left(W\right) = {Δ}_{W} ⋅ \left⌊\frac{W}{{Δ}_{W}}\right⌋ ,$ where *Q*_{Δ_{W}}(*W*) represents the quantized weight parameter; Δ*_{W}* represents a quantization stepsize of the weight parameter; *W* represents the weight parameter; and $\left⌊⋅\right⌋$ represents rounding down a tensor to a nearest integer.

In addition, the quantized activation value may be shown in the following formula: ${Q}_{{Δ}_{X}} \left(X\right) = {Δ}_{X} ⋅ \left⌊\frac{X}{{Δ}_{X}}\right⌋ ,$ where *Q*_{Δ_{X}}(*X*) represents the quantized activation value; Δ*_{X}* represents a quantization stepsize of the activation value; and *X* represents the activation value.

Actually, at least two network structures are quantized in each round of quantization process. Therefore, a process of optimizing a quantization parameter of a network structure in any round of quantization process may be shown in the following formula:$arg {min}_{{Δ}_{W}^{l , k} , {Δ}_{X}^{l , k}} Recon \left({B}_{l , k}\left({W}^{l , k}, {X}^{l , k}\right)-{B}_{l , k}\left({Q}_{{Δ}_{W}^{l , k}}\left({W}^{l , k}\right),{Q}_{{Δ}_{X}^{l , k}}\left({X}^{l , k}\right)\right)\right) 1 \leq l < k \leq K ,$ where argmin(f(x)) represents obtaining x that minimizes the function f(x); Recon() represents obtaining a difference value; *B*_{*l*,*k*}(*W^{l,k}*, *X^{l,k}*) represents outputs of a network structure l to a network structure k; *W^{l,k}* represents weight parameters of the network structure l to the network structure k; *X^{l,k}* represents activation values in the network structure l to the network structure k; ${B}_{l , k} \left({Q}_{{Δ}_{W}^{l , k}}\left({W}^{l , k}\right),{Q}_{{Δ}_{X}^{l , k}}\left({X}^{l , k}\right)\right)$ represents outputs of the network structure l to the network structure k on which parameter transformation is performed based on quantization parameters; ${Q}_{{Δ}_{W}^{l , k}} \left({W}^{l , k}\right)$ represents quantized weight parameters in the network structure l to the network structure k; and ${Q}_{{Δ}_{X}^{l , k}} \left({X}^{l , k}\right)$ represents quantized activation values in the network structure l to the network structure k.

Specifically, a definition of Recon() may be shown in the following formula: $Recon \left({f}_{1}, {f}_{2}\right) = \left‖f1-f2\right‖ + KLD \left(softmax\left({f}_{1}\right),softmax\left({f}_{2}\right)\right) ,$ where KLD() represents obtaining a KL divergence, and softmax() represents normalization.

In some embodiments, in addition to the foregoing quantization stepsize, the quantization parameter for the weight parameter may further include a weight compensation matrix. The quantization stepsize is used to update a weight parameter in a network structure, and the weight compensation matrix is used to compensate for an updated weight parameter. In this case, a process of quantizing the target model is actually a process of learning the quantization stepsize and the weight compensation matrix. After the weight parameter is updated by using the quantization stepsize, an error is generated. Therefore, an error caused by rounding down the weight during fixed-point quantization can be compensated for by adding the weight compensation matrix and the updated weight parameter. Generally, values of elements in the weight compensation matrix are usually 0 and 1.

Optionally, the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices. Low-rank decomposition is a manner of decomposing a high-dimensional matrix into low-rank matrices, and can effectively reduce data dimensionality and reduce redundant information.

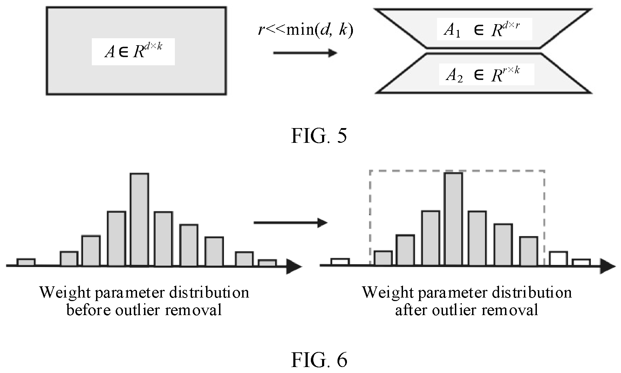

For example, FIG. 5 is a diagram of performing low-rank decomposition on a weight compensation matrix according to an embodiment of this application. As shown in FIG. 5, the weight compensation matrix A is d×k-dimensional. After low-rank decomposition is performed on the weight compensation matrix A, the weight compensation matrix A can be decomposed into a matrix A₁ and a matrix A₂. The matrix A₁ is d×r-dimensional, the matrix A₁ is r×k-dimensional, and r is far less than the smaller one of d and k.

It should be noted that the low-rank decomposition manner shown in FIG. 5 is to obtain two matrices by performing low-rank decomposition on one weight compensation matrix. In an actual application, two or more matrices may alternatively be obtained by performing low-rank decomposition on one weight compensation matrix. This depends on the low-rank decomposition manner, and is not specifically limited in this embodiment.

In other words, low-rank decomposition is performed on the weight compensation matrix with a large quantity of parameters, so that a plurality of matrices with a small quantity of parameters can be used to represent a weight compensation matrix with a large quantity of parameters, to obviate a need to store and process a weight compensation matrix with a huge quantity of parameters in a quantization process.

In this solution, a plurality of matrices with a small quantity of parameters are obtained by performing low-rank decomposition on the weight compensation matrix with a large quantity of parameters, so that the plurality of matrices with a small quantity of parameters can be learned in the quantization process, and the weight compensation matrix with a large quantity of parameters does not need to be learned, to greatly reduce a quantity of parameters to be learned in the quantization process, and reduce a quantity of iterations and resource occupation in the quantization process. Especially for a large language model with a huge quantity of parameters, a plurality of matrices with a very small quantity of parameters can be obtained by performing low-rank decomposition on a weight compensation matrix with a huge quantity of parameters, to greatly reduce costs of learning the weight compensation matrix.

Generally, in a network structure, different neural network layers correspond to different quantization parameters. For example, the quantization parameter for the weight parameter is actually for converting a weight parameter at a current neural network layer from a floating point number to a fixed-point number, and a distribution range of the weight parameter at the current neural network layer affects an actual value of the quantization parameter, and finally affects specific values of a fixed-point number into which the weight parameter is converted. When some values of the weight parameter at the neural network layer differ greatly from most other values of the weight parameter, the weight parameter has a large distribution range, making it difficult to determine an effective quantization parameter.

Based on this, in this embodiment, during execution of each round of quantization process, one or more outliers may be selected from a plurality of values of a weight parameter at a same neural network layer in a network structure, and the plurality of values of the weight parameter include the one or more outliers. In other words, the one or more outliers are identified in the plurality of values of the weight parameter. The one or more outliers refer to one or more values that differ greatly from other values in the plurality of values of the weight parameter. For example, it is assumed that there are 1000 values of a weight parameter currently, where 998 values of the weight parameter are distributed in a range of [0, 10], and the other two values of the weight parameter are 150 and 160 respectively. In this case, it may be determined that the two values of the weight parameter are outliers.

Then, a value of a weight parameter corresponding to the one or more outliers is set to a preset threshold, that is, the value of the weight parameter that is classified as the outlier is changed to the preset threshold. The preset threshold may be a preset value determined based on a distribution range of the plurality of values of the weight parameter, for example, 0, or any value in a distribution range of other values of the weight parameter than the outliers in the plurality of values of the weight parameter.

It should be noted that the foregoing process of identifying the outlier of the weight parameter is independently performed for each neural network layer in the network structure, that is, different outliers may be identified in different neural network layers. The foregoing steps may be performed to identify an outlier at any neural network layer, and details are not described in this embodiment again.

In this solution, the outlier in the weight parameter is identified, and the value of the weight parameter that is classified as the outlier is adjusted to the preset threshold, so that the distribution range of the weight parameter can be narrowed down, to reduce difficulty in learning the quantization parameter, facilitate learning of a better quantization parameter, and improve accuracy of the quantized target model. In addition, because an outlier of an activation value is caused by the outlier of the weight parameter to some extent, the adjustment of the outlier of the weight parameter can improve the outlier of the activation value, to facilitate learning of a better quantization parameter for the activation value.

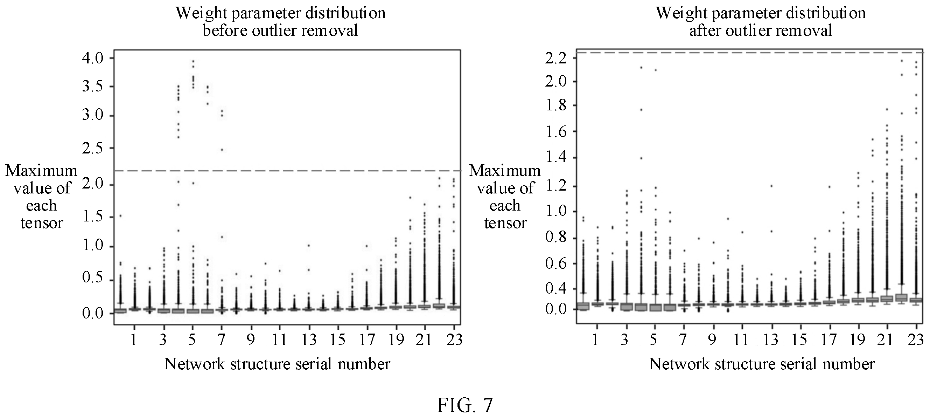

For example, refer to FIG. 6 and FIG. 7. FIG. 6 is a diagram showing comparison of distribution of a weight parameter according to an embodiment of this application, and FIG. 7 is another diagram showing comparison of distribution of a weight parameter according to an embodiment of this application. As shown in FIG. 6, before outlier removal, a distribution range of the weight parameter is larger, and after outlier removal, a distribution range of the weight parameter is smaller. As shown in FIG. 7, before outlier removal, a distribution range of the weight parameter is [0, 4], and after outlier removal, a distribution range of the weight parameter changes to [0, 2.2]. This effectively narrows down the distribution range of the weight parameter, and facilitates subsequent determining of the quantization parameter for the weight parameter.

Optionally, a process of selecting an outlier from a plurality of values of a weight parameter in a network structure may specifically include: First, a coarse-grained outlier range is determined based on the plurality of values of the weight parameter, where values of the weight parameter in the coarse-grained outlier range are all greater than a first threshold or are all less than a second threshold, and the first threshold or the second threshold is determined based on distribution of the plurality of values of the weight parameter. In other words, first, the first threshold or the second threshold is determined based on the distribution status of the plurality of values of the weight parameter, and a range within which the values of the weight parameter greater than the first threshold fall is determined as the coarse-grained outlier range, or a range within which the values of the weight parameter less than the second threshold fall is determined as the coarse-grained outlier range. Specifically, the first threshold may be a positive value, and the second threshold is a negative value. In general, the values in the coarse-grained outlier range are far away from 0. The plurality of values of the weight parameter are all positive values or negative values. For a weight parameter at a same neural network layer, in this embodiment, one coarse-grained outlier range is determined for a plurality of values of the weight parameter that are positive values, another coarse-grained outlier range is determined for a plurality of values of the weight parameter that are negative values, and an outlier is further determined in each coarse-grained outlier range.

Then, a fine-grained outlier range is further determined in the coarse-grained outlier range. The coarse-grained outlier range is relative to the fine-grained outlier range. The fine-grained outlier range falls within the coarse-grained outlier range, and distribution of values in the fine-grained outlier range meets a preset condition. After the fine-grained outlier range is identified, it may be determined that a value of the weight parameter in the fine-grained outlier range belongs to the one or more outliers. In other words, if a value of the weight parameter falls within the fine-grained outlier range, it may be considered that the value of the weight parameter is an outlier. Generally, the coarse-grained outlier range may be determined and divided into a reserved range and a fine-grained outlier range. In this case, the preset condition that the distribution status of the values in the fine-grained outlier range meets may be specifically: A distance between the fine-grained outlier range and the reserved range is as large as possible, and values in the reserved range are distributed as close as possible.

There are a plurality of manners of determining the first threshold and the second threshold that are used to determine the coarse-grained outlier range. For example, using the first threshold as an example, the first threshold may be determined based on a third quartile in the plurality of values of the weight parameter and an interquartile range. Alternatively, the first threshold may be a value at a specific location in the plurality of values of the weight parameter. For example, the first threshold is the 90^{th} percentile of the plurality of values of the weight parameter arranged in ascending order. In general, a manner of determining the first threshold and the second threshold is not limited in this embodiment.

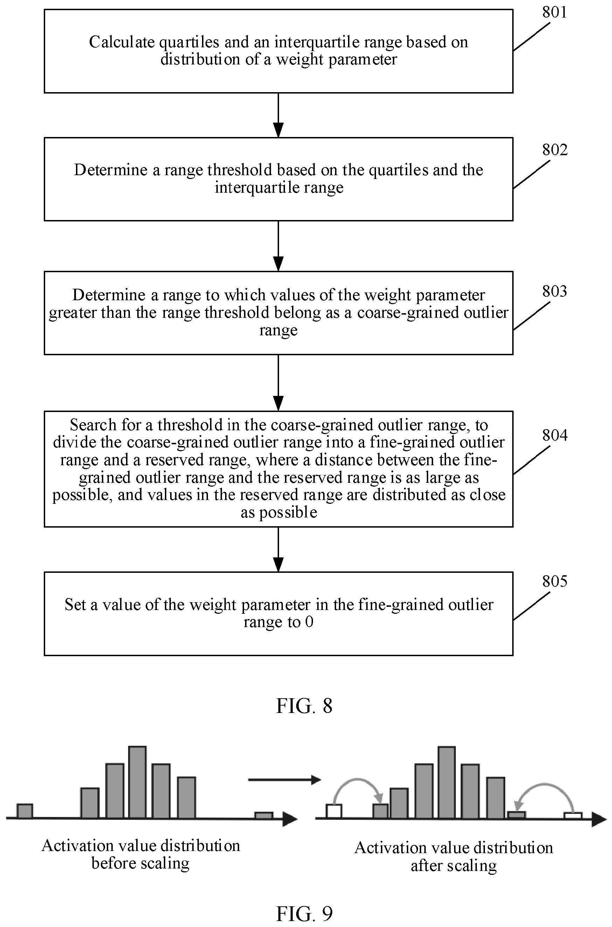

For example, FIG. 8 is a schematic flowchart of preprocessing a weight parameter according to an embodiment of this application. As shown in FIG. 8, a procedure of preprocessing a weight parameter in a network structure includes the following steps 801 to 805.

Step 801: Calculate quartiles and an interquartile range based on distribution of the weight parameter.

Specifically, for a plurality of values of the weight parameter at one neural network layer, the plurality of values of the weight parameter may be arranged in ascending order, and a first quartile Q₁ and a third quartile Q₃ may be determined. The first quartile Q₁ is specifically the 25^{th} percentile of the plurality of values of the weight parameter arranged in ascending order, and the third quartile Q₃ is specifically the 75^{th} percentile of the plurality of values of the weight parameter arranged in ascending order. The interquartile range (IQR) is a difference between the third quartile Q₃ and the first quartile Q₁.

Step 802: Determine a range threshold based on the quartiles and the interquartile range.

The range threshold may be specifically: T = Q₃ + λ₁IQR, where λ₁ is a hyperparameter, and a value of λ₁ may be specifically 1.5.

Step 803: Determine a range to which values of the weight parameter greater than the range threshold belong as a coarse-grained outlier range.

Assuming that the coarse-grained outlier range is O, the coarse-grained outlier range O may be specifically expressed as: O = { x| x > T, x ∈ X}, where x is a value of the weight parameter, and X is a distribution range of the values of the weight parameter.

Step 804: Search for a threshold in the coarse-grained outlier range, to divide the coarse-grained outlier range into a fine-grained outlier range and a reserved range, where a distance between the fine-grained outlier range and the reserved range is as large as possible, and values in the reserved range are distributed as close as possible.

Specifically, the values of the weight parameter included in the coarse-grained outlier range may be traversed one by one, to determine one value of the weight parameter as a found threshold, and the coarse-grained outlier range is divided into a fine-grained outlier range and a reserved range based on the found threshold. For example, in the coarse-grained outlier range, a range within which values of the weight parameter less than or equal to the found threshold fall is the reserved range, and a range within which values of the weight parameter greater than the found threshold fall is the fine-grained outlier range.

To make the distance between the fine-grained outlier range and the reserved range as large as possible and the values in the reserved range distributed as close as possible, the following formula may be set to search for a corresponding threshold: Specifically, assuming that the fine-grained outlier range is *Oₒᵤₜₗᵢₑᵣ* and the reserved range is *O_{reserved}*, the distance between the fine-grained outlier range *Oₒᵤₜₗᵢₑᵣ* and the reserved range *O_{reserved}* and the distribution of the values in the reserved range *O_{reserved}* satisfy the following formulas: ${M}_{intra} = var \left({O}_{reserved}\right)$ ${M}_{inter} = {\left(min\left({O}_{outlier}\right)-max\left({O}_{reserved}\right)\right)}^{2} ,$ $M = {M}_{inter} - {λ}_{2} {M}_{intra}$ where *Mᵢₙₜᵣₐ* represents a variance of the values in the reserved range *O_{reserved}*; *Mᵢₙₜₑᵣ* represents the distance between the fine-grained outlier range *Oₒᵤₜₗᵢₑᵣ* and the reserved range *O_{reserved}*; and *λ*₂ represents a hyperparameter, for example, 0.1. The values in the coarse-grained outlier range are traversed, to determine that a value that can maximize M is the foregoing threshold, and then the final fine-grained outlier range *Oₒᵤₜₗᵢₑᵣ* and the reserved range *O_{reserved}* are determined.

Step 805: Set a value of the weight parameter in the fine-grained outlier range to 0.

After the fine-grained outlier range is identified, the value of the weight parameter in the fine-grained outlier range may be set to 0, to remove an outlier of the weight parameter.

The foregoing describes a process of identifying an outlier of a weight parameter and processing the outlier of the weight parameter. Similarly, before an activation value in the network structure is quantized, an outlier of the activation value may also be identified and processed.

For example, during execution of each round of quantization process, at least one outlier may be selected from a plurality of values of an activation value at a same neural network layer in a network structure. The at least one outlier refers to one or more values that differ greatly from other values in the plurality of values of the activation value.

Then, a value of the activation value corresponding to the at least one outlier is scaled based on a target ratio, so that the value of the activation value obtained by scaling is the same as the largest value of the activation value except the outlier in the plurality of values of the activation value. It should be noted that the target ratio for scaling varies with different values of the activation value. For example, it is assumed that there are 1000 values of the activation value currently, where 998 values of the activation value are distributed in a range of [0, 10], a largest value of the activation value among the 998 values of the activation value is 10, and the other two values of the activation value that are classified as outliers are 80 and 100 respectively. In this way, for the activation value whose value is 80, the activation value may be scaled to 10 based on a ratio of 8:1; and for the activation value whose value is 100, the activation value may be scaled to 10 based on a ratio of 10:1.

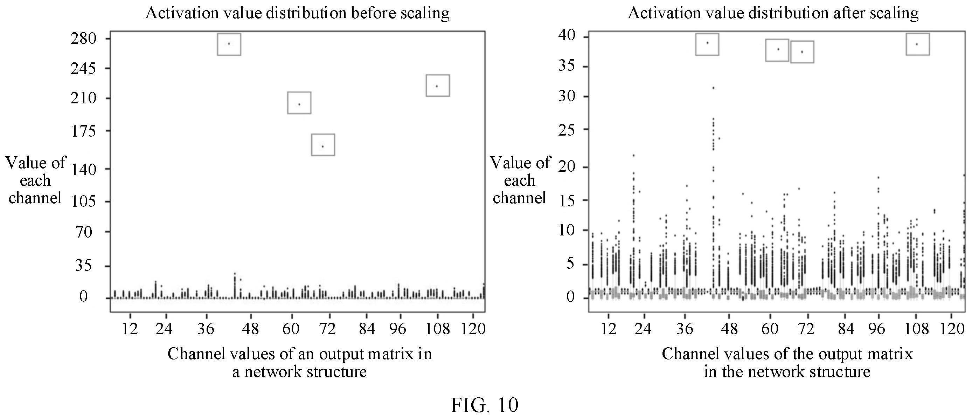

For example, refer to FIG. 9 and FIG. 10. FIG. 9 is a diagram showing comparison of distribution of an activation value according to an embodiment of this application, and FIG. 10 is another diagram showing comparison of distribution of an activation value according to an embodiment of this application. As shown in FIG. 9, before outlier removal, a distribution range of the activation value is larger, and after outlier scaling, a distribution range of the activation value is smaller. As shown in FIG. 10, before outlier removal, the distribution range of the activation value is [0, 280], and after outlier removal, the distribution range of the activation value changes to [0, 40]. This effectively narrows down the distribution range of the activation value, and facilitates subsequent determining of a quantization parameter for the activation value.

Different from setting the outlier of the weight parameter to the preset threshold, in this embodiment, after the outlier corresponding to the activation value is identified, the activation value is scaled. It may be understood that because the activation value is usually an output of a neural network layer, if the activation value is directly set to a preset threshold (for example, 0), the output of the neural network layer is directly affected, prone to affecting accuracy of a model. Therefore, in this embodiment, the outlier of the activation value is scaled. For the outlier of the weight parameter, because the weight parameter indirectly affects the output of the neural network layer, setting the weight parameter to the preset threshold does not significantly affect the accuracy of the model, and can effectively reduce difficulty in learning the quantization parameter.

In this solution, the outlier in the activation value is identified, and the activation value classified as the outlier is scaled, so that the distribution range of the activation value can be narrowed down, to reduce difficulty in learning the quantization parameter, facilitate learning of a better quantization parameter, and improve accuracy of the quantized target model.

It should be noted that in this embodiment, a manner of identifying an outlier based on a plurality of values of an activation value may be similar to the foregoing manner of identifying an outlier based on a plurality of values of a weight parameter. For details, refer to the foregoing embodiments, and details are not described herein again.

The foregoing describes in detail the method provided in embodiments of this application. The following describes a device that is provided in embodiments of this application and that is configured to perform the foregoing method.

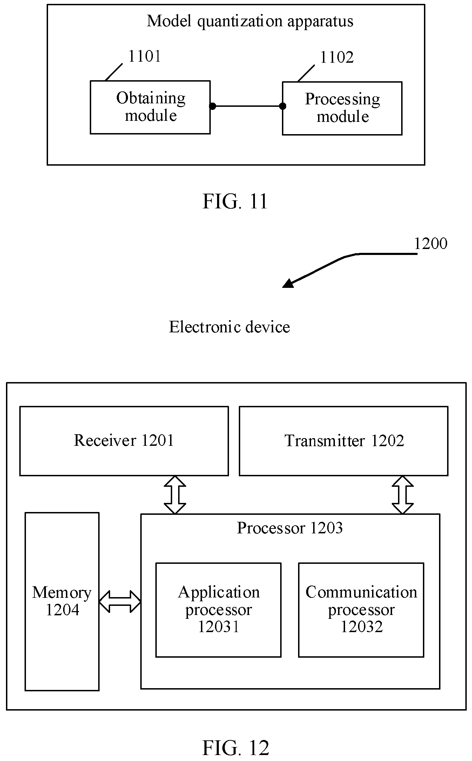

FIG. 11 is a diagram of a structure of a model quantization apparatus according to an embodiment of this application. As shown in FIG. 11, the model quantization apparatus provided in this embodiment of this application includes: an obtaining module 1101, configured to obtain a target model, where the target model includes a plurality of network structures that are sequentially connected; and a processing module 1102, configured to perform a plurality of rounds of quantization processes to obtain a quantized target model, where the quantized target model includes a plurality of quantized network structures, and the plurality of rounds of quantization processes are sequentially performed based on a connection sequence of the plurality of network structures, where in the plurality of rounds of quantization processes, at least two consecutive network structures among the plurality of network structures are quantized in each round of quantization process, a part of the plurality of network structures are quantized in each round of quantization process, and for any two consecutive rounds of quantization processes in the plurality of rounds of quantization processes, there is at least one network structure that is quantized in both a latter round and a former round.

In a possible implementation, first N network structures quantized in the latter round of quantization process and last N network structures quantized in the former round of quantization process are same N network structures, and N is an integer greater than or equal to 1.

In a possible implementation, the processing module 1102 is further configured to: input first input data into at least two network structures to obtain first output data, where the at least two network structures are network structures quantized in the target round of quantization process, the first input data is an output of network structures preceding the at least two network structures, and the target round of quantization process is one of the plurality of rounds of quantization processes; input second input data into at least two network structures that have been quantized based on a quantization parameter, to obtain second output data, where the second input data is an output of quantized network structures preceding the at least two network structures; and update the quantization parameter for the at least two network structures based on a difference between the first output data and the second output data.

In a possible implementation, the quantization parameter includes a quantization stepsize and a weight compensation matrix, the quantization stepsize is used to update a weight parameter in a network structure, and the weight compensation matrix is used to compensate for an updated weight parameter; and the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices.

In a possible implementation, the difference is a weighted average value of a first difference value and a second difference value, the first difference value is a Euclidean distance between the first output data and the second output data, and the second difference value is a relative entropy between the first output data and the second output data.

In a possible implementation, during execution of each round of quantization process, the processing module 1102 is further configured to: select one or more outliers from a plurality of values of a weight parameter in a network structure; and set a value of the weight parameter corresponding to the one or more outliers to a preset threshold.

In a possible implementation, the processing module 1102 is further configured to: determine a coarse-grained outlier range based on the plurality of values of the weight parameter, where values of the weight parameter in the coarse-grained outlier range are all greater than a first threshold or are all less than a second threshold, and the first threshold or the second threshold is determined based on distribution of the plurality of values of the weight parameter; and determine a fine-grained outlier range based on the coarse-grained outlier range, where the fine-grained outlier range falls within the coarse-grained outlier range, distribution of values in the fine-grained outlier range meets a preset condition, and a value of the weight parameter in the fine-grained outlier range belongs to the one or more outliers.

In a possible implementation, during execution of each round of quantization process and before an activation value in a network structure is quantized, the processing module 1102 is further configured to: select at least one outlier from a plurality of values of an activation value in a network structure, where the plurality of values of the activation value include the at least one outlier; and scale a value of the activation value corresponding to the at least one outlier based on a target ratio.

In a possible implementation, the target model is a large language model.

In a possible implementation, each of the plurality of network structures includes one or more transformer blocks.

FIG. 12 is a diagram of a structure of an electronic device according to an embodiment of this application. The electronic device 1200 may be specifically embodied as a mobile phone, a tablet, a notebook computer, an intelligent wearable device, a server, or the like. This is not limited herein. Specifically, the electronic device 1200 includes a receiver 1201, a transmitter 1202, a processor 1203, and a memory 1204 (where there may be one or more processors 1203 in the electronic device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide an instruction and data to the processor 1203. A part of the memory 1204 may further include a non-volatile random access memory (non-volatile random access memory, NVRAM). The memory 1204 stores a processor and operation instructions, an executable module, or a data structure, or a subset thereof, or an extended set thereof. The operation instructions may include various operation instructions used to implement various operations.

The processor 1203 controls an operation of the electronic device. During specific application, various components of the electronic device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to the processor 1203, or may be implemented by the processor 1203. The processor 1203 may be an integrated circuit chip with a signal processing capability. In an implementation process, the steps in the foregoing methods may be completed by using an integrated logic circuit of hardware in the processor 1203 or instructions in a form of software. The processor 1203 may be a general-purpose processor, a digital signal processor (digital signal processor, DSP), a microprocessor, or a microcontroller. The processor 1203 may further include an application specific integrated circuit (application specific integrated circuit, ASIC), a field-programmable gate array (field-programmable gate array, FPGA) or another programmable logic device, a discrete gate, or a transistor logic device, or a discrete hardware component.

The processor 1203 may implement or perform the methods, the steps, and the logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 fetches information in the memory 1204, and completes the steps of the foregoing method in combination with its hardware.

The receiver 1201 may be configured to receive input digital or character information, and generate a signal input related to related settings and function control of the electronic device. The transmitter 1202 may be configured to output digital or character information through a first interface. The transmitter 1202 may be further configured to send an instruction to a disk group through the first interface, to modify data in the disk group. The transmitter 1202 may further include a display device such as a display.

The electronic device provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the electronic device performs the multimedia data classification method described in the foregoing embodiment, or a chip in a training device performs the model quantization method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

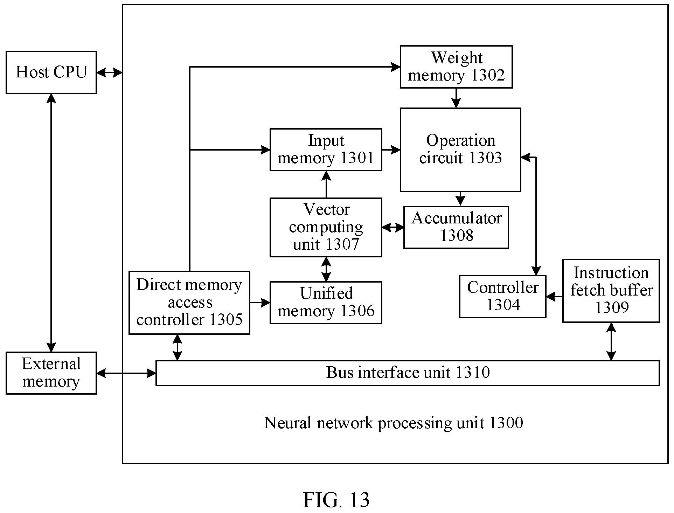

Specifically, FIG. 13 is a diagram of a structure of a chip according to an embodiment of this application. The chip may be embodied as a neural network processing unit NPU 1300. The NPU 1300 is mounted to a host CPU (Host CPU) as a coprocessor, and the host CPU allocates a task. A core part of the NPU is an operation circuit 1303. A controller 1304 controls the operation circuit 1303 to extract matrix data in a memory and perform a multiplication operation.

In some implementations, the operation circuit 1303 includes a plurality of processing units (Processing Engines, PEs). In some implementations, the operation circuit 1303 is a two-dimensional systolic array. The operation circuit 1303 may alternatively be a one-dimensional systolic array or another electronic circuit that can perform mathematical operations such as multiplication and addition. In some implementations, the operation circuit 1303 is a general-purpose matrix processor.

For example, it is assumed that there are an input matrix A, a weight matrix B, and an output matrix C. The operation circuit fetches, from a weight memory 1302, data corresponding to the matrix B, and caches the data on each PE in the operation circuit. The operation circuit fetches data of the matrix A from an input memory 1301, to perform a matrix operation on the matrix B, and stores an obtained partial result or an obtained final result of the matrix in an accumulator (accumulator) 1308.

A unified memory 1306 is configured to store input data and output data. Weight data is directly transferred to the weight memory 1302 via a direct memory access controller (Direct Memory Access Controller, DMAC) 1305. The input data is also transferred to the unified memory 1306 through the DMAC.

A BIU is a bus interface unit, namely, a bus interface unit 1310, and is configured to perform interaction between an AXI bus and the DMAC and between the AXI bus and an instruction fetch buffer (Instruction Fetch Buffer, IFB) 1309.

The bus interface unit 1310 (Bus Interface Unit, BIU) is configured for the instruction fetch buffer 1309 to obtain instructions from an external memory, and is further configured for the direct memory access controller 1305 to obtain original data of the input matrix A or the weight matrix B from the external memory.

The DMAC is mainly configured to transfer input data in the external memory DDR to the unified memory 1306, transfer weight data to the weight memory 1302, or transfer input data to the input memory 1301.

A vector compute unit 1307 includes a plurality of operation processing units. If needed, further processing, for example, vector multiplication, vector addition, an exponential operation, a logarithm operation, or size comparison, is performed on an output of the operation circuit 1303. The vector compute unit 1307 is mainly configured to perform network computing, for example, batch normalization (Batch Normalization), pixel-level summation, or up-sampling on a feature plane, at a non-convolutional/fully connected layer of a neural network.

In some implementations, the vector compute unit 1307 can store a processed output vector in the unified memory 1306. For example, the vector compute unit 1307 may apply a linear function or a non-linear function to the output of the operation circuit 1303, for example, perform linear interpolation on a feature plane extracted at a convolutional layer. For another example, the vector compute unit 1307 may apply a linear function or a non-linear function to a vector of an accumulated value, to generate an activation value. In some implementations, the vector compute unit 1307 generates a normalized value, a value obtained through pixel-level summation, or both a normalized value and a value obtained through pixel-level summation. In some implementations, the processed output vector can be used as an activation input to the operation circuit 1303, for example, to be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private for a hardware architecture of the NPU.

Any one of the processors mentioned above may be a general-purpose central processing unit, a microprocessor, an ASIC, or one or more integrated circuits for controlling program execution.

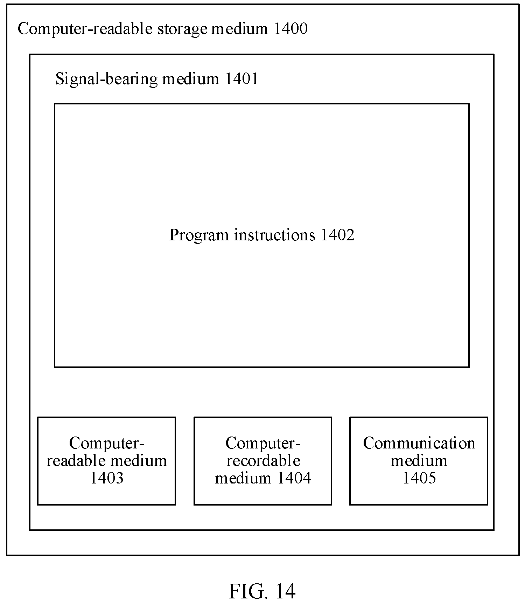

FIG. 14 is a diagram of a structure of a computer-readable storage medium according to an embodiment of this application. This application further provides a computer-readable storage medium. In some embodiments, the method disclosed in FIG. 2 may be implemented as computer program instructions encoded on the computer-readable storage medium or encoded on another non-transitory medium or product in a machine-readable format.

FIG. 14 schematically shows a conceptual partial view of an example computer-readable storage medium arranged according to at least some embodiments shown herein, and the example computer-readable storage medium includes a computer program for executing a computer process on a compute device.

In an embodiment, a computer-readable storage medium 1400 is provided by using a signal-bearing medium 1401. The signal-bearing medium 1401 may include one or more program instructions 1402, and when the one or more program instructions 1402 are run by one or more processors, the foregoing functions or some functions described in FIG. 2 may be provided.

In some examples, the signal-bearing medium 1401 may include a computer-readable medium 1403, for example, but not limited to, a hard disk drive, a compact disc (CD), a digital video disc (DVD), a digital tape, a memory, a ROM, or a RAM.

In some implementations, the signal-bearing medium 1401 may include a computer-recordable medium 1404, for example, but not limited to, a memory, a read/write (R/W) CD, an R/W DVD, or the like. In some implementations, the signal-bearing medium 1401 may include a communication medium 1405, for example, but not limited to, a digital and/or analog communication medium (for example, an optical cable, a waveguide, a wired communication link, or a wireless communication link). Therefore, for example, the signal-bearing medium 1401 may be delivered through the communication medium 1405 (for example, a wireless communication medium complying with the IEEE 802.X standard or another transmission protocol) in a wireless form.

The one or more program instructions 1402 may be, for example, computer-executable instructions or logic implementation instructions. In some examples, the compute device may be configured to provide various operations, functions, or actions in response to the program instructions 1402 that are delivered to the compute device by using one or more of the computer-readable medium 1403, the computer-recordable medium 1404, and/or the communication medium 1405.

It should be further noted that the apparatus embodiments described above are merely examples, and the units described as separate components may be or may not be physically separate. A component displayed as a unit may be or may not be a physical unit; and may be located at one position, or may be distributed in a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (Solid-State Disk, SSD)), or the like.

## Claims

1. A model quantization method, comprising:
obtaining a target model, wherein the target model comprises a plurality of network structures that are sequentially connected; and
performing a plurality of rounds of quantization processes to obtain a quantized target model, wherein the quantized target model comprises the plurality of quantized network structures, and the plurality of rounds of quantization processes are sequentially performed based on a connection sequence of the plurality of network structures, wherein
in the plurality of rounds of quantization processes, at least two consecutive network structures among the plurality of network structures are quantized in each round of quantization process, a part of the plurality of network structures are quantized in each round of quantization process, and for any two consecutive rounds of quantization processes in the plurality of rounds of quantization processes, there is at least one network structure that is quantized in both a latter round and a former round.

2. The method according to claim 1, wherein first N network structures quantized in the latter round of quantization process and last N network structures quantized in the former round of quantization process are same N network structures, and N is an integer greater than or equal to 1.

3. The method according to claim 1 or 2, wherein a target round of quantization process in the plurality of rounds of quantization processes comprises:
inputting first input data into at least two network structures to obtain first output data, wherein the at least two network structures are network structures quantized in the target round of quantization process, the first input data is an output of network structures preceding the at least two network structures, and the target round of quantization process is one of the plurality of rounds of quantization processes;
inputting second input data into the at least two network structures that have been quantized based on a quantization parameter, to obtain second output data, wherein the second input data is an output of quantized network structures preceding the at least two network structures; and
updating the quantization parameter for the at least two network structures based on a difference between the first output data and the second output data.

4. The method according to claim 3, wherein the quantization parameter comprises a quantization stepsize and a weight compensation matrix, the quantization stepsize is used to update a weight parameter in a network structure, and the weight compensation matrix is used to compensate for an updated weight parameter; and
the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices.

5. The method according to claim 3 or 4, wherein the difference is a weighted average value of a first difference value and a second difference value, the first difference value is a Euclidean distance between the first output data and the second output data, and the second difference value is a relative entropy between the first output data and the second output data.

6. The method according to any one of claims 1 to 5, wherein during execution of each round of quantization process, the method further comprises:
selecting one or more outliers from a plurality of values of a weight parameter in a network structure; and
setting a value of the weight parameter corresponding to the one or more outliers to a preset threshold.

7. The method according to claim 6, wherein the selecting the one or more outliers from the plurality of values of the weight parameter in the network structure and the selecting the one or more outliers from the plurality of values of the weight parameter in the network structure comprises:
determining a coarse-grained outlier range based on the plurality of values of the weight parameter, wherein values of the weight parameter in the coarse-grained outlier range are all greater than a first threshold or are all less than a second threshold, and the first threshold or the second threshold is determined based on distribution of the plurality of values of the weight parameter; and
determining a fine-grained outlier range based on the coarse-grained outlier range, wherein the fine-grained outlier range falls within the coarse-grained outlier range, distribution of values in the fine-grained outlier range meets a preset condition, and a value of the weight parameter in the fine-grained outlier range belongs to the one or more outliers.

8. The method according to any one of claims 1 to 7, wherein during execution of each round of quantization process, the method further comprises:
selecting at least one outlier from a plurality of values of an activation value in a network structure; and
scaling a value of the activation value corresponding to the at least one outlier based on a target ratio.

9. The method according to any one of claims 1 to 8, wherein the target model is a large language model.

10. The method according to claim 9, wherein each of the plurality of network structures comprises one or more transformer blocks.

11. A model quantization apparatus, comprising:
an obtaining module, configured to obtain a target model, wherein the target model comprises a plurality of network structures that are sequentially connected; and
a processing module, configured to perform a plurality of rounds of quantization processes to obtain a quantized target model, wherein the quantized target model comprises the plurality of quantized network structures, and the plurality of rounds of quantization processes are sequentially performed based on a connection sequence of the plurality of network structures, wherein
in the plurality of rounds of quantization processes, at least two consecutive network structures among the plurality of network structures are quantized in each round of quantization process, a part of the plurality of network structures are quantized in each round of quantization process, and for any two consecutive rounds of quantization processes in the plurality of rounds of quantization processes, there is at least one network structure that is quantized in both a latter round and a former round.

12. The apparatus according to claim 11, wherein first N network structures quantized in the latter round of quantization process and last N network structures quantized in the former round of quantization process are same N network structures, and N is an integer greater than or equal to 1.

13. The apparatus according to claim 11 or 12, wherein the processing module is further configured to:
input first input data into at least two network structures to obtain first output data, wherein the at least two network structures are network structures quantized in the target round of quantization process, the first input data is an output of network structures preceding the at least two network structures, and the target round of quantization process is one of the plurality of rounds of quantization processes;
input second input data into the at least two network structures that have been quantized based on a quantization parameter, to obtain second output data, wherein the second input data is an output of quantized network structures preceding the at least two network structures; and
update the quantization parameter for the at least two network structures based on a difference between the first output data and the second output data.

14. The apparatus according to claim 13, wherein the quantization parameter comprises a quantization stepsize and a weight compensation matrix, the quantization stepsize is used to update a weight parameter in a network structure, and the weight compensation matrix is used to compensate for an updated weight parameter; and
the weight compensation matrix is factorized into a plurality of low-rank matrices, a total quantity of parameters of the plurality of matrices is less than a quantity of parameters of the weight compensation matrix, and the weight compensation matrix is updated by updating the plurality of matrices.

15. The apparatus according to claim 13 or 14, wherein the difference is a weighted average value of a first difference value and a second difference value, the first difference value is a Euclidean distance between the first output data and the second output data, and the second difference value is a weighted average value of a relative entropy between the first output data and the second output data.

16. The apparatus according to any one of claims 11 to 15, wherein during execution of each round of quantization process, the processing module is further configured to:
select one or more outliers from a plurality of values of a weight parameter in a network structure; and
set a value of the weight parameter corresponding to the one or more outliers to a preset threshold.

17. The apparatus according to claim 16, wherein the processing module is further configured to:
determine a coarse-grained outlier range based on the plurality of values of the weight parameter, wherein values of the weight parameter in the coarse-grained outlier range are all greater than a first threshold or are all less than a second threshold, and the first threshold or the second threshold is determined based on distribution of the plurality of values of the weight parameter; and
determine a fine-grained outlier range based on the coarse-grained outlier range, wherein the fine-grained outlier range falls within the coarse-grained outlier range, distribution of values in the fine-grained outlier range meets a preset condition, and a value of the weight parameter in the fine-grained outlier range belongs to the one or more outliers.

18. The apparatus according to any one of claims 11 to 17, wherein during execution of each round of quantization process, the processing module is further configured to:
select at least one outlier from a plurality of values of an activation value in a network structure, wherein the plurality of values of the activation value comprise the at least one outlier; and
scale a value of the activation value corresponding to the at least one outlier based on a target ratio.

19. The apparatus according to any one of claims 11 to 18, wherein the target model is a large language model.

20. The apparatus according to claim 19, wherein each of the plurality of network structures comprises one or more transformer blocks.

21. A model quantization apparatus, comprising a memory and a processor, wherein the memory stores code, and the processor is configured to execute the code; and when the code is executed, the apparatus performs the method according to any one of claims 1 to 10.

22. A computer storage medium, wherein the computer storage medium stores instructions; and when the instructions are executed on a computer, the computer is enabled to implement the method according to any one of claims 1 to 10.
